# EUROPEAN PATENT APPLICATION

(11) **EP 3 960 446 A1**
(43) Date of publication of application: **02.03.2022**
(21) Application number: 20193463.5
(22) Date of filing: 28.08.2020
(51) Int. Cl.: B32B 27/10, B32B 27/30, B32B 27/32, B32B 27/34, B32B 27/08, B32B 7/12

(54) **A HEAT-SEALABLE PACKAGING SHEET**

(71) Applicant: Danapak Flexibles A/S, 4200 Slagelse (DK)
(72) Inventor: Johansen, Peter, 5000 Odense C (DK); Midtiby, Steen, 4654 Faxe Ladeplads (DK)
(74) Representative: AWA Denmark A/S

(57) **Abstract**

A heat-sealable packaging sheet comprising a base sheet of paper, a heat-sealable ethylene layer, a polyamide layer, and a polymer coextrusion coating tie layer, wherein the tie layer, the polyamide layer, and the ethylene layer have been co-extrusion coated together on a second surface of the base sheet, wherein the base sheet constitutes at least 73 wt% of a total grammage of the packaging sheet, and the coextrusion coating constitutes no more than 27 wt% of a total grammage of the packaging sheet, wherein the base sheet has a grammage of 60 to 150 g/m², and the coextrusion coating has a grammage of 5 to 32 g/m², wherein the tie layer has a grammage of 1 to 30 g/m², wherein the polyamide layer has a grammage of 1 to 30 g/m², wherein the ethylene layer has a grammage of 1 to 30 g/m², and wherein the ethylene layer essentially consists of a coextrusion coatable copolymer of ethylene and at least one acid comonomer, wherein the at least one comonomer constitutes 5 to 20 wt% of the ethylene layer.

## Description

The present disclosure relates to heat-sealable packaging sheets for being pre-punched to heat-sealable sheet lids for being heat-sealed to containers, wherein the packaging sheets comprise a paper base sheet coextrusion coated with a coextrusion coating comprising an ethylene heat-seal layer.

A range of heat-sealable sheet lids for being heat-sealed to containers, scush as cups containing yoghurt or other foodstuffs, are known, and some of these are widely applied.

Some of such known sheet lids comprise a sealing lacquer applied to a base sheet, while others include a polymer heat-seal layer extrusion coated or coextrusion coated on a base sheet or base film. The base sheet may be polymer-based, such as of polyester, e.g. a polyethylene terephthalate (PET) film, or may be an aluminium film or a paper sheet. The heat-seal layer may include a range of monomers, polymers, or copolymers suitable for heat-sealing against a range of different surfaces of containers. These include ethylene, styrene, polypropylene, and polymers and copolymers thereof, including polyethylene (PE), polypropylene (PP), and polystyrene (PS). They also include polyesters, such as PET.

Some sheet lids include one or more barrier layers to provide a barrier to oxygen/air and/or light to protect the contents of the container. Such a barrier layer or barrier coating may be a metallization on a base sheet of the lid.

Sheet lids applying different polymer heat seal layers are disclosed in the applicant's WO 2011/160627 A, WO 2013/075713 A, and WO2018/215606 A1. WO 09534489 A discloses a sheet comprising 60 g/m² paper and a 45 g/m² coextrusion, the coextrusion including a 20 g/m² PBT layer, a 5 g/m² EMA layer, and a 20 g/m² further EMA layer. WO 06058952 A discloses a sheet including paper, a polymeric support layer and a PS heat seal layer of PS, acrylate copolymer and a fine inorganic substance.

Containers to which such sheet lids are to be sealed are typically cups comprising a suitable seal surface. Such cups can comprise an open top, which is closed and sealed by the sheet lid. The containers can be closed and sealed with the sheet lid after dosing of the foodstuff product into the container, which produces a package comprising the container, the foodstuff product in the container, and the sheet lid. The seal surface of a cup is typically provided as or on a fold along a top rim of a side wall of the cup. The cup may be of a plastic material, such as PE, to which the sheet lids can be heat-sealed, or the cup may comprise a paper base coated with such a plastic material on an inside thereof so that an outward fold at the cup's rim includes the plastic material. The plastic material is chosen to correspond to the material of the heat seal layer of the sheet lid.

Upon opening of such a package, the sheet lid is torn off, typically by pulling a peripheral tab of the sheet lid whereby the delamination may occur between layers or within a layer of the sheet lid. It is often desired that such a delamination occurs in a controlled area and substantially only at the heat seal area. Delamination will typically occur at the weakest location. Paper is often a relatively weak material, and in some prior art paper-based sheet lids, the weakest location is provided in the paper, meaning that the paper sheet is torn upon opening of the package, which is typically not desired, especially since it may be an annoyance to a user. In other cases, the weakest position may be provided in the container, such as in a paper base sheet of the container, which is usually not at all desired since this may lead to spillage of the container contents.

Also, a relatively low curl of the packaging sheets, and especially of sheet lids pre-punched from the packaging sheets, is often desired to allow for the packaging to be effectively carried out on a packaging machine to which the lids are provided in stacks and are individually dispensed from the stack in connection with the sealing of the lids to containers.

Currently, there is a shift towards manufacture of lids that are more suitable for being recycled. Lids including a paper base sheet may in some cases be recycled as "paper", especially if the amount of paper in relation to a total amount of material of the lids is relatively high. If the container to which the sheet lid was sealed also includes a relatively large amount of paper, it may be possible to recycle both the sheet lid and the container as "paper". To be recycled as "paper", aluminium and metal content is preferably minimal or non-existing.

Accordingly, it may be seen as an object of the packaging sheets of the present disclosure to provide packaging sheets as mentioned in the introduction, wherein sheet lids pre-punched from the packaging sheets are suitable or more suitable for being recycled, especially as "paper" and, potentially, where such pre-punched lids have a small curl and/or suitable barrier properties. Another or an additional object may be to provide recyclability of such sheet lids together with containers to which they are or were sealed. Another or an additional object may be to provide a suitable combination of (or suitably low) peel strength and/or, or combined with, a suitable (or suitably high) seal strength of the heat seal layer of such sheet lids towards a seal layer of a suitable container to which the sheet lids are to be heat-sealed, especially so that peeling does not occur within paper of the sheet lid itself or of a container to which the sheet lid is sealed and/or so that peeling will substantially occur between the ethylene layer and a seal surface of a container to which the packaging sheets or sheet lids thereof are to be sealed. The latter peel type can be denoted an "adhesive peel" or a "delamination" between the ethylene layer and the seal surface.

It may be achievable to meet one or more of these and/or further objects by the provision of packaging sheets according to a first aspect of the present disclosure, which involves a packaging sheet according to claim 1.

The packaging sheet may alternatively be defined as a heat-sealable packaging sheet comprising a base sheet of paper, a heat-sealable ethylene layer, a polyamide layer, and a polymer coextrusion coating tie layer, wherein the tie layer, the polyamide layer, and the ethylene layer have been co-extrusion coated together on a second surface of the base sheet, wherein the base sheet constitutes at least 73 wt% of a total grammage of the packaging sheet, and the coextrusion coating constitutes no more than 27 wt% of a total grammage of the packaging sheet, wherein the base sheet has a grammage of 60 to 150 g/m², and the coextrusion coating has a grammage of 5 to 32 g/m², wherein the tie layer has a grammage of 1 to 30 g/m², wherein the polyamide layer has a grammage of 1 to 30 g/m², wherein the ethylene layer has a grammage of 1 to 30 g/m², and wherein the ethylene layer essentially consists of a coextrusion coatable copolymer of a copolymer of an ethylene monomer and at least one comonomer that is not an ethylene monomer, wherein the at least one comonomer constitutes 5 to 20 wt% of the ethylene layer.

Packaging sheets according to the present disclosure may be suitable for recycling, potentially as "paper", e.g. for manufacture of new paper materials. This may be due to a relatively large amount of paper compared to other materials, especially non-paper materials, such as ethylene. Furthermore, material use especially of the materials of the coextrusion coating may be relatively low in the packaging sheets of the present disclosure, The packaging sheets of the present disclosure may therefore be seen as very environmentally sustainable.

Experiments have shown that such packaging sheets can be manufactured with suitably low curl, suitable heat-seal strength and peelability, and suitable barrier properties. Accordingly, sheet lids for containers may be pre-punched from such packaging sheets, such sheet lids being suitable or more suitable for being recycled, especially as "paper". A small curl may make such sheet lids suitable for being applied to containers as pre-punched lids, i.e. sheet lids which have been punched before being sealed to the container. It is believed that low grammage of the (or a thin) coextrusion coating may contribute to this effect. A peel strength allowing for peeling between the ethylene layer and a seal surface of a container may be achieved, thus avoiding tearing of paper or other layers within the sheet lid and/or within a container to which the sheet lid has been sealed upon opening of a package comprising the sheet lid sealed to the container. This may especially be achieved for containers of PE or including a seal surface of a PE layer. The seal strength may at the same time be sufficient to provide a suitable seal of such containers. Also, the packaging sheets may be relatively easy to heat seal to containers, i.e. heat sealing at relatively low temperatures and for a relatively short amount of time may achieve a suitable seal, saving energy and time, lowering the risk of set-off or discolouring, and reducing the need to clean heat-sealing equipment.

Surprisingly, it has been realized that these and/or further advantages may be arrived at in spite of relatively low grammages of the coextrusion coating totally and of the individual layers thereof of the packaging sheets according to the present disclosure. The low grammages of the coextrusion coating layers may also have the effect of reducing risk of tear of paper of a container upon peeling of a sheet lid of the packaging sheets from the container. The polyamide layer may provide tear strength to the packaging sheets, reducing the risk of paper of the base sheet being torn upon opening of the container. It may be seen as suprising that the ethylene seal layer of the packaging sheets of the present disclosure can be manufactured to be both suitably sealable and peelable while also providing suitable adhesion to the polyamide layer while also avoiding paper tear. This may at least partly be contributed to a suitable acid content of the ethylene layer. Furthermore, low grammages of the coextrusion coating saves material and costs of manufacture.

The term "grammage" as used in the present disclosure is expressed in g/m² (mass per unit area) and is a measure of the areal density of sheets or layers of a laminate or of the laminate itself. The term "total grammage" is intended to mean the accumulated grammage of two or more layers. For example, two layers each having a grammage of 1 g/m² have a total grammage of 2 g/m². The grammages may be wet weight or dry weight grammages and/or may be measured before, during, or after manufacture, especially the coextrusion coating step of the manufacturing process.

Polyamide may alternatively be denoted nylon.

The base sheet and all further layers of the packaging sheets of the present disclosure may be distributed to have substantially uniform thickness or grammage across substantially an entire planar extent of the packaging sheets.

The base sheet may be manufactured in a first process separate from the coextrusion coating step.

The term "packaging sheet" as used herein may alternatively be denoted "sheet laminate".

The base sheet may consist of only one single layer, potentially one single paper layer. Additionally, or alternatively, the further layers of the packaging sheet and/or the layers of the coextrusion coating and/or onje or more or all of the polyamide layer, the tie layer, and the ethylene layer may consist of only one single layer, i.e. they comprise no sublayers. The tie layer may include two or more tie sublayers, wherein each of these two or more tie sublayers may be considered to form a tie layer.

The base sheet may be conventional paper and/or may mainly comprise or substantially consist of cellulose fibres. The paper may comprise other additives such as bonding additives, adhesive additives, and colouring agents. The paper may comprise machine glazed (MG) paper, i.e. paper given a high finish on one side only by drying the paper in continuous contact with a highly polished heated cylinder. The paper may be clay coated. The paper may be cardboard.

The ethylene layer may be a heat seal layer and/or a contact layer and/or a welding layer. The term "heat-sealing" as used herein may alternatively be denoted "welding". The ethylene layer may comprise at least 70, 75, 80, 85, 86, 87, or 88 wt% ethylene. The ethylene layer may or may not comprise fillers and/or binders, such as polymer binders, polyurethane binders, nitrocel-lulosis binders or polyester binders. Not including fillers may provide desired seal properties of the packaging sheets. The ethylene layer may or may not further comprise slip additives, such as a wax, and/or softening, colouring and stiffening additives. The contact layer may in some embodiments comprise pores of a gas, such as air. In such embodiments the pores preferably constitute less than 10, more preferred 5, most preferred 2, percent by volume of the contact layer.

In the context of the present disclosure, water vapour transmission rate (WVTR) is measured according to standard test method ASTM F1249 at 38°C and 90 % atmospheric humidity and rated per 24 hours unless noted otherwise. The packaging sheets of the present disclosure may have a water vapour transmission rate of less than 1500, 1400, 1300, 1200, 1100, or 1050 g/m² per 24 hours at 38°C and 90 % atmospheric humidity.

In some embodiments, the packaging sheets of the present disclosure has an oxygen transmission rate of less than 1000, 750, 500m 400,, or 300 cm³/m² per 24 hours per bar (OTR; 0%RH 23°C; ASTM D3985).

In the packaging sheets of the present disclosure, the layers of the coextrusion coating have been coextrusion coated onto the paper base sheet. In such a sheet, the coextrusion coated layers will adhere to the base sheet without a separate adhesive/glue layer being provided between them. Accordingly, no separate adhesive or glue layer that includes a hardener or a hardening agent/component, will be present between the tie layer and the base sheet. An adhesive or glue layer that includes a hardener or a hardening agent/component may be defined as a layer that comprises or essentially consists of a two-component adhesive or a two-component glue such as a polyurethane (PU) based adhesive/glue, available from, for example, Henkel AG, Coim Spa or Dow Chemical. Alternatively, it can be determined from a sheet laminate that the tie layer and contact layer have been coextrusion coated onto the base sheet since in that case the sheet laminate will have very small curl compared to if it were manufactured in another manner. An extrusion coating primer may be present between the tie layer and the base sheet, the primer potentially improving or providing adhesion between these. Such a primer may comprise or essentially consist of a substantially water soluble or a substantially water insoluble primer and may be selected from the group consisting of: a polyurethane (PU) based primer, preferably with reactive isocyanate groups, a polyurethane/polyvinyl buthylene (PvB) based primer, a polyurethane/nitrocellulose (NC) based primer, a hotmelt primer based on UV hardening technology, a polyethylenimine based primer, and a combination thereof.

The ethylene layer may comprise one or more selected from an LDPE (low density polyethylene), an HDPE (high density polyethylene), an MDPE (medium density polyethylene), a PE copolymer, and a PE terpolymer.

The inner and outer surfaces of the packaging sheet may be free surfaces or surfaces not covered by any further layers or coatings of the packaging sheet.

The potentially applied extrusion coating primer may be provided on the second surface of the base sheet and may potentially be applied before the coextrusion coating step. The primer layer may have a dry weight grammage of less than 2, 1.5, 1.2, 1, 0.8, 0.5, 0.3, 0.2, 0.1, or 0.05 g/m². The primer may comprise or substantially consist of polyethylene imine, ethylene acrylic acid, and/or a PP based primer.

In some embodiments, no further layers or material are provided on the outer surface of the paper base sheet. Alternatively, a print layer and/or a coloured layer and/or a protection lacquer, which may be transparent, may be provided at or on the first surface of the paper base sheet, an outer surface of the coloured layer establishing at least part of said outer surface of the packaging sheet.

The tie layer and the ethylene layer may be of the same material or of different materials. Both the tie layer and the ethylene layer may be of or comprise any one of the examples of materials for the tie layer and/or the ethylene layer as disclosed herein as suitable for any one of these.

The tie layer may comprise two or more tie sublayers. The tie layer may comprise, or one or each of or more sublayers thereof may comprise, at least 50, 60, 70, 80, 90, 95, 98, or substantially 100 % by weight polyolefin. A polyolefin may be defined as the class of polymers produced from a simple olefin (also called an alkene with the general formula CnH2n) as a monomer. The tie layer may comprise or mainly consist of one or more materials selected from an ethylene copolymer, an ethylene terpolymer, each potentially comprising an ethylene-acrylic ester, an ethylene maleic anhydride, an ethylene vinyl acetate, an ethylene methyl acrylate, an ethylene butyl acrylate, a metallocene, an ethyl acrylate, an ethylene acrylic acid, an ethylene methacrylic acid, an ethylene - acrylic ester - maleic anhydride (EMA) terpolymer, an ethylene-butyl acrylate maleic anhydrate ter-polymer, a random terpolymer of ethylene, an acrylic ester, and a maleic anhydride. Examples of tie layer materials include Escor 5110, an EAA copolymer, or LOTADER^{®} 3410 or 3210, both random terpolymers of ethylene, acrylic ester and maleic anhydride. Another example is Arkema Lotader 4503. The tie layer may be or comprise a blend of several materials. The tie layer may comprise or consist of a copolymer of ethylene and at least one further monomer and/or may be or comprise a PE.

A base sheet grammage of 60 g/m² or above may contribute to reach a suitably low amount of curl of the packaging sheet, especially to allow handling of sheet lids pre-punched from the packaging sheet, i.e. heat-sealed to a container after the sheet lids have been punched. A base sheet grammage of 150 g/m² or below may improve the heat seal abilities.

As mentioned, the ethylene layer and the tie layer may be or comprise the same materials. The tie layer may thus be of or comprise the same materials as described in the following.

The at least one acid comonomer may be or comprise ethylenically unsaturated carboxylic acid monomers, such as acrylic acid and methacrylic acid, and/or maleic anhydride. The at least one acid comonomer may form part of a terpolymer. The terpolymer may comprise acrylic acid and/or methacrylic acid and/or maleic anhydride and/or vinyl acetate and/or polyvinyl acetate). The terpolymer may be a terpolymer of ethylene, acrylic acid, and maleic anhydride. The terpolymer may be a terpolymer comprising ethylene and acrylic acid and/or methacrylic acid. The terpolymer may be a terpolymer comprising ethylene and maleic anhydride.

The copolymer may be or comprise ethylene acrylic acid (EAA) and/or ethylene methacrylic acid (EMAA) and/or ethylene vinyl acetate (EVA). An example of a suitable copolymer is Escor 5110, an EAA copolymer extrusion coating/extrusion lamination resin having an acrylic acid content of 11.0 wt%, a density of 0.939 g/cm3, and a melt index of 14 g/10 min, 190°C/2.15 kg. Another example is DuPont Nucrel 0609HSA, an EMAA having a methacrylic acid content of 6.5 wt%. Another potentially suitable copolymer is an EVA, specifically an EVA copolymer resin, such as marketed by ExxonMobil under the trade name Escorene^{™} Ultra UL 00728EL.

A higher acid content of a layer may improve adhesion to one or more adjacent layers. A high acid content could negatively influence the heat seal ability of the ethylene layer.

The polyamide layer may comprise or consist of a modified and/or PA and/or may essentially consist of a modified, low viscosity PA, such as Grilon XE 3878. The polyamide layer may consist essentially of PA.

A base sheet grammage of above 60 g/m2 may contribute to reach a suitably low amount of curl of the packaging sheet, especially to allow handling of sheet lids pre-punched from the packaging sheet, i.e. heat-sealed to a container after the sheet lids have been punched.

In an embodiment of the packaging sheets according to the present disclosure, the base sheet has a grammage of 80 to 120 g/m².

The base sheet grammage may be 80-140, 80-130, 80-110, 80-100, or 85-95 g/m².

In another embodiment, the base sheet constitutes at least 85 wt% of the total grammage of the packaging sheet, and the coextrusion coating constitutes from 5 to 15 wt% of the total grammage of the packaging sheet.

The base sheet may generally constitute at least 75, 80, 85, 86, 87, 88, 89, 90, 91, 92, 93, 94, 95, 96, or 97 wt% of the total grammage of the packaging sheet.

The coextrusion coating may generally constitute from 5 or 6 or 7 or 8 or 9 or 10 or 11 to 20 or 19 or 18 or 17 or 16 or 15 or 14 or 13 or 12 or 11 wt% of the total grammage of the packaging sheet.

In another embodiment, the tie layer has a grammage of 2 to 6 g/m².

The tie layer may generally have a grammage of 1 or 1.5 or 2 to 30 or to 27 or to 25 or to 20 or to 15 or to 12 or to 10 or to 8 or to 7 or to 6 or to 5 or to 4 or to 3 g/m².

In case the tie layer includes two, three, or more tie sub-layers, a total grammage of the two or more tie sub-layers may be according to one of the grammages mentioned for the tie layer.

In another embodiment, the polyamide layer has a grammage of 2 to 6 g/m².

The polyamide layer may generally have a grammage of 1 or 1.5 or 2 or 3 or 4 to 30 or to 27 or to 25 or to 20 or to 15 or to 12 or to 10 or to 8 or to 7 or to 6 g/m².

In another embodiment, the ethylene layer has a grammage of 2 to 6 g/m².

The ethylene layer may generally have a grammage of 1 or 1.5 or 2 to 30 or to 27 or to 25 or to 20 or to 15 or to 12 or to 10 or to 8 or to 7 or to 6 or to 5 or to 4 or to 3 g/m².

In another embodiment, the at least one comonomer is selected from the group consisting of acid monomers, such as an acrylic acid or methacrylic acid, ester monomers, such as an acrylate, anhydride monomers, and acetate monomers, such as ethylene vinyl acetate. The at least one comonomer of the ethylene layer may be acrylic acid, methacrylic acid, vinyl acetate, and/or maleic anhydride.

The at least one comonomer constitutes 5 to 20 wt% of the ethylene layer of the packaging sheets of the present disclosure. In case only a single comonomers is present in the ethylene layer, the single comonomer may constitute the 5 to 20 wt% of the ethylene layer. In case two or more comonomers are present in the ethylene layer, the two or more comonomers may constitute the 5 to 20 wt% of the ethylene layer.

In another embodiment, the at least one comonomer constitutes 8 to 15 wt% of the ethylene layer.

The at least one comonomer may generally constitute 5 or 6 or 7 or 8 or 9 or 10 to 20 or 19 or 18 or 16 or 15 or 14 or 13 or 12 wt% of the ethylene layer.

The remaining parts of the ethylene layer, i.e. the parts not including the at least one comonomer, may essentially consist of ethylene comonomer or an ethylene comonomer.

In another embodiment, the packaging sheet further comprises a barrier layer or barrier coating, such as a metallization, on the base sheet.

The barrier layer or barrier coating on the base layer may be or comprise a metallization of a surface of the base layer, a lacquer, an ink, a colour, or a coloured layer. A metallization may include a metallization primer facing the base layer, followed by a metal layer, followed by a lacquer layer. The metallization may include a metal, such as Al. A thickness of the metal layer may be very small, such as less than 1 um, especially in the nm range. A grammage of the metallization may be less than or equal to 5, 4, or 3 and/or higher than or equal to 1, 2, or 3 g/m². A lacquer barrier layer may have a grammage of above or equal to 3, 4, 5, 6, 7, 8, 9, or 10 and/or less than or equal to 20, 19, 18, 17, 16, 15, 14, 13, 12, 11, 10, 9, 8, 7, 6, or 5 g/m².

In another embodiment, the packaging sheet essentially consists of the base layer, the tie layer, the polyamide layer, the ethylene layer, potentially the primer layer, and potentially an optional barrier layer.

In another embodiment, the packaging sheet essentially consists of the base layer, the tie layer, the polyamide layer, the ethylene layer, and potentially the primer layer,
wherein the base sheet constitutes at least 85 wt% of the total grammage of the packaging sheet, and the coextrusion coating constitutes less than 15 wt% of the total grammage of the packaging sheet,
wherein the paper base sheet has a grammage of 85 to 100 g/m²,
wherein the tie layer has a grammage of 2 to 3 g/m²,
wherein the polyamide layer has a grammage of 4 to 6 g/m²,
wherein the ethylene layer has a grammage of 2 to 3 g/m²,
wherein the at least one comonomer of the ethylene layer is acrylic acid, and
wherein the acrylic acid constitutes 10 to 12 wt% of the ethylene layer.

In another aspect of the present disclosure, a heat-sealable sheet lid for a container is provided, wherein the sheet lid has been pre-punched from a packaging sheet according to any one of the previous claims.

A pre-punched sheet lid has been punched from the packaging sheet but is not yet sealed to a container. A pre-punched sheet lid may exist freely and/or unsealed to a container without marks or indications on its seal surface indicating that it has previously been sealed to and then peeled off from a container. Several, such as more than 100, such pre-punched sheet lids may be packaged and/or stacked to prepare them from being dispensed in a packaging machine to be sealed to containers.

In another aspect of the present disclosure, a package comprising a sheet lid according to any one of the above embodiments and a container, such as a cup, is provided, wherein the container comprises a seal surface, and wherein the sheet lid is sealed to the seal surface of the container.

The container may be a container comprising or essentially consisting of a PE. The container may be a container comprising or essentially consisting of paper, such as cardboard, coated with a PE, potentially on inner surface thereof.

The container may be a potentially frustoconical cup and/or may comprise a suitable seal surface. The container or cup can comprise an open top, which is closed and sealed by the sheet lid. The container may be closed and sealed with the sheet lid after dosing of a product, such as a foodstuff product, into the container, which may produce a package comprising the container, the product in the container, and the sheet lid. The seal surface of the container or cup may be provided as or on a fold along a top rim of a side wall of the container or cup. The container or cup may be of a plastic material, such as PE, to which the sheet lid is heat-sealed, or the container or cup may comprise a paper (cardboard) base coated with such a plastic material on an inside thereof so that an outward fold at the container or cup's rim includes the plastic material. The plastic material may be chosen to be compatible with sealing to the material of the polyethylene layer of the sheet lid.

Upon opening of such a package, the sheet lid may be pulled or torn off, such as by pulling a peripheral tab of the sheet lid, whereby delamination may occur between the ethylene layer and the seal surface of the container, potentially substantially only at the heat seal area. Potentially, substantially no tear of paper of the base sheet and/or the container occurs.

After use, the sheet lid and/or the container may be disposed of as recyclable material and may be transported to recycle facility where they may be recycled, potentially as paper, and used, potentially as paper, in new products.

In another aspect of the present disclosure, a method for manufacturing a packaging sheet according to any one of the above embodiments is provided, the method comprising coextrusion coating the tie layer, the polyamide layer, and the ethylene layer together on the second surface of the paper base sheet, or on an extrusion coating primer layer thereon, to form the coextrusion coating comprising the tie layer, the polyamide layer, and the ethylene layer.

In case the tie layer includes two or more tie sub-layers, the two or more tie sub-layers will be coextruded together with the other layers as described.

The coextrusion coated layers may be coated to provide the grammages mentioned above. Alternatively, the coextrusion coating layers may be provided to the base sheet in the grammages mentioned above to provide grammages of these layers of the manufactured packaging sheet.

Extrusion coating and coextrusion coating are well-known processes where a carrier foil or base sheet is moved between two rollers, a cooling roller and a counter roller, respectively. Coextrusion is a process of extruding two or more materials through a single die of an extruder so that the extrudates merge and weld together into a laminar structure before chilling or quenching. Coextrusion can be employed in film blowing, free film extrusion, and extrusion coating processes, the latter being referred to as coextrusion coating. Extrusion lamination and coextrusion lamination are processes similar to extrusion coating and coextrusion coating, respectively, but where two sheets of material are laminated together.

In the methods of manufacture of packaging sheets according to the present disclosure, the coextrusion coating, specifically comprising or consisting of a thermoplastic polymeric melt, may be applied between the base sheet and the cooling roller in a continuous process. Upon contact with the cooling roller, the melt may solidify, and upon contact with the base sheet, the thermoplastic melt may be adhered to the base sheet, potentially without the use of an adhesive/glue layer between them. The result will be the base sheet coated with a thin layer of the coextruded thermoplastic material, i.e. the coextrusion coating.

The coextrusion coating step may be performed in or by means of an extruder.

The three or more coextruded melts may be extruded together from one common die. While still not having been chilled and solidified, the melts may be coated onto the base sheet so that the coextruded layers adhere to the base sheet. As mentioned, an extrusion coating primer may be applied to the base sheet before the coextruded melt is applied to it to improve adherence.

The materials for the different layers of the coextrusion coating may be fed into a feed block of an extruder through a respective separate feeder, which may comprise a worm or other means for transporting the materials through the feeder and into the feed block.

The melts or extrudates within the die may merge and weld together into a laminar structure to form the coextruded layers that are applied onto the base sheet before chilling or quenching. Chilling or quenching may be carried out by applying the coextruded layers or the packaging sheet onto a cooling roller in a subsequently performed coating step of the coextrusion coating process. In the coating step, the two or more coextruded melts may be extruded onto the base sheet so that the coextruded layers adhere to the base sheet. The coextruded layers and the base sheet may be guided through a nip between the cooling roller and an opposed pressure roller, and pressure may be applied between the two rollers. The contact layer may face the cooling roller, the base sheet facing the pressure roller. As mentioned, a primer may be applied to the base sheet before the coextruded melt is applied onto it. The potential primer is preferably applied to the base sheet immediately before the coextruded layers are coated onto the base sheet, i.e. less than 60, 30, 15, 5, 4, 3, 2 or 1 seconds before.

In another aspect of the present disclosure, a method for manufacturing a package according to any one of the above embodiments is provided, the method comprising sealing the pre-punched sheet lid to the seal surface of the container.

Any and all of the options and embodiments disclosed herein regarding compositions, grammages etc. of the packaging sheets, different layers, methods, etc. may be combined.

The above and/or additional objects, features and advantages of the present invention will be further outlined by the following illustrative and nonlimiting detailed description of embodiments of the present invention with reference to the appended drawings, in which:
Fig. 1 shows a perspective view of an embodiment of the packages according to the present disclosure manufactured according to an embodiment of the methods according to the present disclosure, the package comprising a container and an embodiment of a sheet lid according to the present disclosure manufactured from an embodiment of a sheet laminate according to the present disclosure, the package being shown prior to sealing the sheet lid to the container,
Fig. 2 schematically shows a cross section of a packaging sheet according to an embodiment of the packaging sheets of the present disclosure, and
Fig. 3 schematically illustrates a method of manufacture of the packaging sheet of Fig. 2 according to an embodiment of the methods according to the present disclosure.

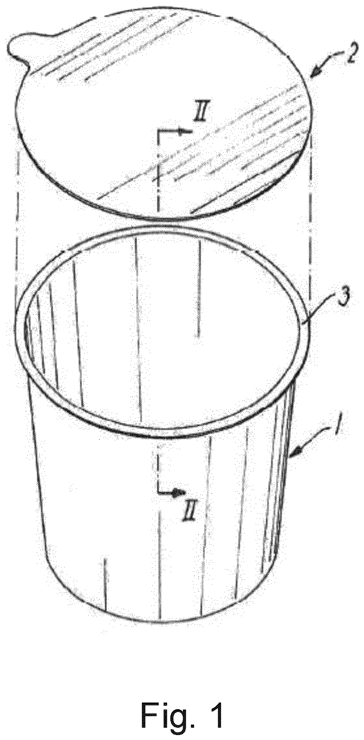

The package shown in Fig. 1 includes a container in the form of a cup 1, a sheet lid 2, and a not shown product or not shown contents positioned in the cup 1. In the actual sealed package, the lid 2 is sealed to a sealing flange or upper rim 3 of the cup 1 as illustrated by the dashed lines.

The cup 1 is a paper, specifically cardboard, cup 1 with an inner PE coating which extends to a bend or fold providing the upper rim 3. A top surface of the rim 3 forms a seal surface to which the lid 2 is sealed along the rim. The cup 1 is frustoconically shaped and comprises an open top circumscribed by the rim 3.

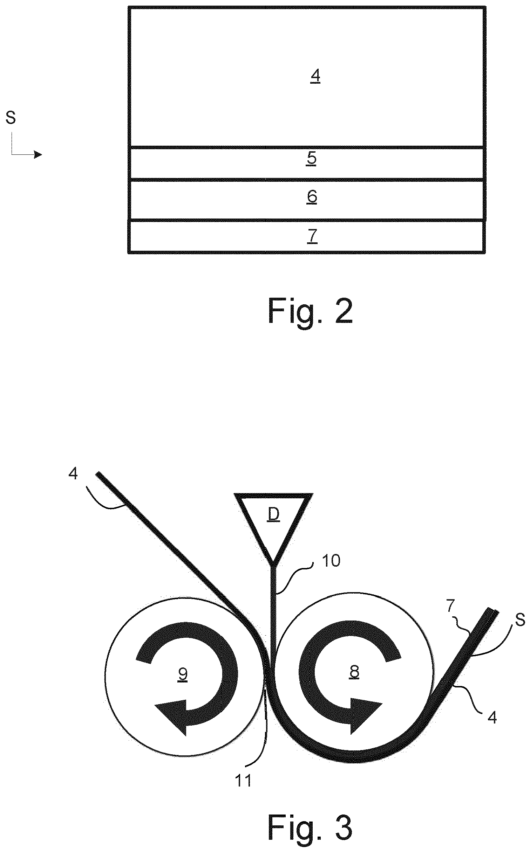

When the cup 1 has been filled with the contents, which may be foodstuff, such as a dairy product, it is closed with the lid 2. The lid 2 has been pre-punched, i.e. punched in advance of closing the cup 1, from the sheet laminate S shown in Fig. 2 and is thus adapted in shape and size to the opening of the cup 1, specifically the rim 3, before the sealing step.

A schematic cross section of the heat-sealable packaging sheet S from which the lid 2 has been pre-punched is shown in Fig. 2.

The sheet laminate S, and thus the lid 2, comprises a base sheet which is a 90 g/m2 paper sheet 4. The packaging sheet S further comprises a tie layer 5, a polyamide layer 6, and a heat-sealable ethylene layer 7. The layers 5, 6, 7 have been co-extrusion coated together on a second or inner surface of the base sheet 4 as described further below with reference to Fig. 3. The base sheet also comprises an opposite, outer surface which is coinciding with an outer surface of the packaging sheet S. The sheet laminate S also comprises an opposite, inner surface which is coinciding with a seal surface of the ethylene layer or seal layer 7. The inner and outer surfaces of the packaging sheet S are free surfaces or surfaces not covered by any further layers or coatings of the packaging sheet S.

The tie layer 5 is a single layer, i.e. it includes no tie sub-layers. In other embodiments, the tie layer 5 may include one or more tie sub-layers.

The base sheet 4 constitutes 90 wt% of a total grammage of 100 g/m² of the packaging sheet S. The coextrusion coating consisting of layers 5, 6, 7 constitutes the remaining 10 wt% of the total grammage of the packaging sheet S. The tie layer 5 has a grammage of 2.5 g/m², the polyamide layer 6 has a grammage of 5 g/m², and the ethylene layer 7 has a grammage of 2.5 g/m². The ethylene layer essentially consists of a coextrusion coatable copolymer of ethylene an acid comonomer, wherein the acid comonomer constitutes 11 wt% of the ethylene layer 7. The ethylene layer 7 is a heat seal layer.

Each of the tie layer 5 and the ethylene layer 7 consists of the above mentioned Escor 5110, an EAA copolymer.

The base sheet 4 and layers 4, 5, 6 of the packaging sheet S are distributed to have substantially uniform thickness or grammage across substantially an entire planar extent of the packaging sheet S. The base sheet 4 consist of only one single paper layer. Similarly, the layers 5, 6, 7 each consists of only one single layer, i.e. they comprise no sublayers.

The base sheet S is manufactured in a first process separate from the coextrusion coating step.

In the packaging sheet S, the layers 5, 6, 7 of the coextrusion coating have been coextrusion coated onto the base sheet 4. Thus, the coextrusion coated layers adhere to the base sheet S without a separate adhesive/glue layer being provided between them. Accordingly, no separate adhesive or glue layer that includes a hardener or a hardening agent/component is present between the tie layer 5 and the base sheet 4.

In the embodiment shown, the packaging sheet S consists of the base layer 4, the tie layer 5, the polyamide layer 6, and the ethylene layer 7.

The paper sheet 4 can in an alternative embodiment additionally be metallized on one of its two surfaces, a metal layer of the metallization potentially being provided with an outer protective lacquer to prevent the metal layer from being scratched or damaged, a metallization primer potentially being provided on the paper sheet before between the metal layer and the paper sheet 4.

An extrusion coating primer may further potentialy be applied to the second or inner surface of the base sheet 4 before the coextrusion coating step. Such primer layer may have a dry weight grammage of less than 0.1 g/m². The primer may comprise or substantially consist of polyethylene imine, ethylene acrylic acid, and/or a PP based primer.

A print layer and/or a coloured layer and/or a protection lacquer, which may be transparent, may potentially be further provided at or on the outer surface of the base sheet 4, an outer surface of the coloured layer establishing at least part of the outer surface of the packaging sheet S.

The polyamide layer 6 consists of the above mentioned Grilon XE 3878.

Upon opening of the sealed package, the sheet lid 2 is pulled or torn off by pulling a peripheral tab of the lid 2, whereby delamination/peeling occurs between the ethylene layer 7 and the seal surface of the cup 1 substantially only at the heat seal area.

After use, the lid 2 and the cup 1 can be disposed of as recyclable material and are transported to recycle facility where they are recycled as "paper" and used as "paper" in new products.

According to a method for manufacturing the packaging sheet S, the packaging sheet S is manufactured in a coextrusion coating process as illustrated in Fig. 3.

In the coating process of the coextrusion coating step, the paper sheet 4 is continuously rolled off from a feed roll (not shown) to be moved between a cooling roller 8 and a counter roller or pressure roller 9. The cooling roller 8 has a chilled or cooled outer surface onto which a melt 10 of the material eventually forming the coextruded layers 5, 6, 7 is applied from an extruder die D positioned between the base sheet 4 and the cooling roller 8. Before reaching the die D, the materials for forming the coextruded layers are simultaneously and continuously fed into a feed block of an extruder through an associated separate feeder, which comprises a worm for transporting the materials through the feeder and into the feed block.

The coextrusion coating step shown in Fig. 3 is thus a continuous process, the rollers 8, 9 rotating along the arrows shown in Fig. 3 to continuously pull the base sheet 4 off of the feed roll. Upon contact with the base sheet 4 at or right before a nip 11 between the rollers 8, 9, the melt 10 adheres to the base sheet 4. Subsequently, or at the same time, upon contact with the cooling roller 8, the melt 10 is chilled to solidify. The result is the packaging sheet or packaging laminate S comprising the base sheet 4 coated with the layers 5, 6, 7, which is then rolled up on a not shown collecting roller. The melt 10 comprises the three melts of the materials of the layers 5, 6, 7 that are coextruded, i.e. extruded together, through the single die D of the extruder. Thus, the two coextruded melts are coextrusion coated on the base sheet 4 so that the coextruded layers 5, 6, 7 adhere to the base sheet 4 to form the sheet S shown in Fig. 2. The melt 10 and the base sheet 4 are guided through the nip 11 between the cooling roller 8 and the opposed pressure roller 9 so that the melt 10 faces and contacts the cooling roller 8, and the base sheet 4 faces and contacts the pressure roller 9.

Hereby, the layers 5, 6, 7 are coextrusion coated on the second surface of the base sheet 4 so that an inner surface of the packaging sheet and of the polyethylene layer 7 establishes the inner surface of the packaging sheet S and the tie layer 5 is positioned between the paper sheet 4 and the polyamide layer 6.

Coextrusion of the layers 5, 6, 7 occurs through the single die D of the extruder so that the extrudates merge and weld together into a laminar structure in the melt 10. The layers 5, 6, 7 are applied as one thermoplastic, polymeric melt between the base sheet 4 and the cooling roller 8 in a continuous process. Upon contact with the cooling roller 8, the melt solidifies, and upon contact with the base sheet 4, the thermoplastic melt is adhered to the base sheet 4, without the use of an adhesive/glue layer between them. The result is the base sheet 4 coated with a thin layer of the coextruded thermoplastic material of layers 5, 6, 7.

As mentioned, to improve adherence, an extrusion coating primer may additionally be applied to the inner surface of the base sheet 4 before the coextruded melt 10 is applied to it.

When coextrusion coating the layers 5, 6, 7 on the base sheet 4, the layers 5, 6, 7 immediately adhere to each other.

The melts or extrudates within the die D merge and weld together into a laminar structure to form the coextruded layers 5, 6, 7 that are applied onto the base sheet 4 before chilling or quenching. The chilling or quenching is carried out by applying the coextruded layers 5, 6, 7 onto the cooling roller 8. A pressure is applied in the nip 11 between the two rollers 8, 9. The potential extrusion coating primer can be applied to the base sheet immediately before the layers 5, 6, 7 are coated onto the base sheet 4.

### Examples

Several packaging sheets were manufactured which were subsequently subjected to experiments.

Initially, several packaging sheets were manufactured with different grammages of monolayer seal layer extrusion coatings and two-layer coextrusion coatings (tie layer and seal layer) on paper base sheets. From these it was concluded that a coextrusion coating should have a total grammage of at least 5 g/m² to be able to satisfactorily complete the coextrusion coating operation, especially to create a uniform polymer melt. Furthermore, the adhesion to the base sheet was too low, resulting in delamination between the base sheet and the adjacent (co-)extrusion coated layer, even with the use of an extrusion coating primer on the base sheet. Also, tear was observed within the base sheet.

In subsequent experiments, a polyamide layer was included in the coex coating between the tie layer and the seal layer. No extrusion coating primer was applied. These examples will be described in the following. Each of the following examples include a paper base sheet and a coextrusion coating with three layers and nothing further.

The following materials were used in the following examples of packaging sheets:
- Paper base sheet "Paper A": Packpro 7.0
- Paper base sheet "Paper B": Niklaket IML (90 g/m²)
- Tie layer "Tie": Consisted of Escor 5110
- Polyamide layer "PA": Consisted of Grilon XE 3878
- Ethylene layer, "seal A": Consisted of Nucrel 0609HSA, a copolymer of ethylene and 6.5 wt% methacrylic acid (an EMAA).
- Ethylene layer, "seal B": Consisted of Escor 5110.

Packaging sheet 1 was manufactured from a specification with the structure, in sequence:
Packaging sheet 1:
- Paper A, 90 g/m²
- Tie, 6 g/m²
- PA, 18 g/m²
- Seal B, 6 g/m²

Packaging sheet 1 was pre-punched to sheet lids which were then heat-sealed at 125°C and 3 bar for 0.5 s to a paper (cardboard) cup rim incuding a PE coating seal surface at the rim thereof. The sheet lids were then peeled off from the cup.

It was observed that Seal B adhered to both the PA layer and to the cup. The seal withstood a pressure of -0.2 bar for 30 s. However, it was observed that a higher heat seal temperature and/or a longer heat seal exposure time would be preferable which was believed to be due to a relatively large grammage of the coextrusion coating. The sheet lids of Packaging sheet 1 peeled in the seal layer, which was believed to be due to a relatively large grammage of the coextusion coating. The strength needed to peel was observed to be relatively large. Substantially no tear of paper occurred. For Packaging sheet 1 it was concluded that it may be preferable to include a further ethylene heat seal layer in the coextrusion coating to form an outside seal layer, but it was noted that this would increase the total grammage of the coextrusion coating.

Seal B adhered more strongly to PA, thus providing a smaller risk of delamination between the ethylene layer and the PA layer during peel. It was concluded that this was due to a higher acid content in Seal B.

Packaging sheets 2 and 3 were manufactured from specifications with the associated structures, in sequence:
Packaging sheet 2:
   - Paper B, 90 g/m²
   - Tie, 2.5 g/m²
   - PA, 5 g/m²
   - Seal A, 2.5 g/m²
Packaging sheet 3:
   - Paper B, 90 g/m²
   - Tie, 2.5 g/m²
   - PA, 5 g/m²
   - Seal B, 2.5 g/m²

Thus, except from the material of the ethylene layer, packaging sheets 2 and 3 were identical. Packaging sheet 3 corresponds to the packaging sheet S shown in Fig. 2 and was manufactured as described with reference to Fig. 3.

Packaging sheets 2 and 3 were pre-punched to sheet lids which were then heat-sealed at 125°C and 3 bar for 0.5 s to a paper (cardboard) cup rim incuding a PE coating seal surface at the rim thereof. The sheet lids were then peeled off from the cup. The sheet lids punched from Packaging sheet 3 essentially corresponded to the lid 2 as described above with reference to Fig. 1. The cup similarly essentially corresponded to the cup 1 as described above with reference to Fig. 1.

The sheet lids of both Packaging sheets 2 and 3 both peeled between the seal layer of the sheet lid and the seal surface of the cup. It was observed that Seal B adhered well to both the PA layer and to the cup. The strength needed to peel was observed to smaller than for the sheet lids punched from Packaging sheet 1 and to be suitable. Also, it was observed that the heat seal parameters provided a satisfactory seal which was believed to be due to a suitable grammage of the coextrusion coating. The seal withstood a pressure of - 0.2 bar for 30 s. Seal B adhered more strongly to PA than Seal A to thus provide a smaller risk of delamination between the ethylene layer and the PA layer during peel. It was concluded that this was due to a higher acid content in Seal B. No tear of paper occurred.

It was observed that a high adhesive strength was most important between the seal layer and the PA layer to avoid delamination within the packaging sheet and tear of the base sheet during peeling, the adhesive strength between the PA layer and the tie layer being of less importance. Therefore, it was concluded that applying an extrusion coating primer on the base sheet before performing the coextrusion coating was not needed but could be implemented if a stronger adhesion between the base sheet and the tie layer were desired. However, a tie layer between the PA layer and the base layer is believed to be required to achieve satisfactory results.

The WVTR of Packaging sheet 3 was measured to 1022 g/m² per 24 hours at 38°C and 90 % atmospheric humidity. The oxygen transmission rate of Packaging sheet 3 was measured to 251 cm³/m² per 24 hours per bar (OTR; 0%RH 23°C; ASTM D3985). Packaging sheets similar to Packaging sheet 3 were manufactured substituting the base sheet with other types of paper, including Niklakett IML (90 g/m²), Fibreform 100 (g/m²), and Fibreform C1S. These latter experiments provided results comparable to Packaging sheet 3; however, in the latter two paper types, a higher heat-sealing temperature or a longer exposure time would be preferable.

For all Packaging sheets 1 to 3 it was observed that satisfactory results were achievable. No or very little curl was observed.

Results comparable to those achieved for Packaging sheets 1, 2, and 3 are expected to be achievable with further variations of materials and grammages of the paper base sheet and the layers of the coextrusion coating while keeping the relative amount of paper relatively high to provide improved recyclability.

The above examples of packaging sheets can be varied further. Thus, further exemplary packaging sheet specifications including a paper base sheet with a grammage of 60 to 150 g/m² can include the following grammages of the coextrusion coating layers of suitable materials:

| Tie layer [g/m²] | Polyamide layer [g/m²] | Ethylene layer [g/m²] |
|---|---|---|
| 1 | 2 | 2 |
| 1.5 | 2 | 1.5 |
| 3 | 3 | 3 |
| 4 | 4 | 4 |
| 5 | 5 | 5 |
| 10 | 10 | 10 |
| 5 | 10 | 5 |
| 2 | 2 | 2 |
| 3 | 3 | 3 |
| 6 | 18 | 6 |
| 7 | 7 | 7 |
| 2 | 20 | 2 |

Further examples may be devised by the skilled person, potentially with suitable variations of grammages and/or thicknesses deending on the requirements to the packaging sheet. Also, a suitable extrusion coating primer may be applied to the base sheet before carrying out the coextrusion coating.

## Claims

1. A heat-sealable packaging sheet for being pre-punched to a heat-sealable sheet lid for a container, the packaging sheet comprising:
an inner surface and an outer surface, the inner surface being configured for being heat-sealed to the container,
a base sheet of paper having a first surface and a second surface,
a heat-sealable ethylene layer establishing said inner surface of the packaging sheet,
a polyamide layer essentially consisting of a coextrusion coatable polyamide, and
a polymer coextrusion coating tie layer positioned between and connecting the base sheet and the polyamide layer, a first surface of the tie layer contacting the base sheet or an extrusion coating primer layer on the base sheet, a second surface of the tie layer contacting the polyamide layer,
wherein the polyamide layer is positioned between the tie layer and the ethylene layer, a surface of the polyamide layer contacting the ethylene layer,
wherein the tie layer, the polyamide layer, and the ethylene layer have been co-extrusion coated together on the second surface of the paper base sheet, or on an extrusion coating primer layer thereon, to form a coextrusion coating comprising the tie layer, the polyamide layer, and the ethylene layer,
wherein the base sheet constitutes at least 73 wt% of a total grammage of the packaging sheet, and the coextrusion coating constitutes no more than 27 wt% of a total grammage of the packaging sheet,
wherein the base sheet has a grammage of 60 to 150 g/m², and the coextrusion coating has a grammage of 5 to 32 g/m²,
wherein the tie layer has a grammage of 1 to 30 g/m²,
wherein the polyamide layer has a grammage of 1 to 30 g/m²,
wherein the ethylene layer has a grammage of 1 to 30 g/m², and
wherein the ethylene layer essentially consists of a coextrusion coatable copolymer of an ethylene monomer and at least one comonomer that is not an ethylene monomer, wherein the at least one comonomer constitutes 5 to 20 wt% of the ethylene layer.

2. A packaging sheet according to claim 1, wherein the base sheet has a grammage of 80 to 120 g/m².

3. A packaging sheet according to claim 1 or 2, wherein the base sheet constitutes at least 85 wt% of the total grammage of the packaging sheet, and the coextrusion coating constitutes from 5 to 15 wt% of the total grammage of the packaging sheet.

4. A packaging sheet according to any one of the previous claims, wherein the tie layer has a grammage of 2 to 6 g/m².

5. A packaging sheet according to any one of the previous claims, wherein the polyamide layer has a grammage of 2 to 6 g/m².

6. A packaging sheet according to any one of the previous claims, wherein the ethylene layer has a grammage of 2 to 6 g/m².

7. A packaging sheet according to any one of the previous claims, wherein the at least one comonomer is selected from the group consisting of acid monomers, ester monomers, anhydride monomers, and acetate monomers.

8. A packaging sheet according to any one of the previous claims, wherein the at least one comonomer constitutes 8 to 15 wt% of the ethylene layer.

9. A packaging sheet according to any one of the previous claims, further comprising a barrier layer or barrier coating, such as a metallization, on the base sheet.

10. A packaging sheet according to any one of the previous claims, wherein the packaging sheet essentially consists of the base layer, the tie layer, the polyamide layer, the ethylene layer, potentially the primer layer, and an optional barrier layer.

11. A packaging sheet according to any one of the previous claims, wherein the packaging sheet essentially consists of the base layer, the tie layer, the polyamide layer, the ethylene layer, and potentially the primer layer,
wherein the base sheet constitutes at least 85 wt% of the total grammage of the packaging sheet, and the coextrusion coating constitutes less than 15 wt% of the total grammage of the packaging sheet,
wherein the paper base sheet has a grammage of 85 to 100 g/m², wherein the tie layer has a grammage of 2 to 3 g/m²,
wherein the polyamide layer has a grammage of 4 to 6 g/m²,
wherein the ethylene layer has a grammage of 2 to 3 g/m²,
wherein the at least one comonomer of the ethylene layer is acrylic acid, and
wherein the acrylic acid constitutes 10 to 12 wt% of the ethylene layer.

12. A heat-sealable sheet lid for a container, wherein the sheet lid has been pre-punched from a packaging sheet according to any one of the previous claims.

13. A package comprising a sheet lid according to claim 13 and a container, such as a cup, wherein the container comprises a seal surface, and wherein the sheet lid is sealed to the seal surface of the container.

14. A method for manufacturing a packaging sheet according to any one of claims 1 to 11, the method comprising coextrusion coating the tie layer, the polyamide layer, and the ethylene layer together on the second surface of the paper base sheet, or on an extrusion coating primer layer thereon, to form the coextrusion coating comprising the tie layer, the polyamide layer, and the ethylene layer.

15. A method for manufacturing a package according to claim 13, the method comprising sealing the pre-punched sheet lid to the seal surface of the container.
